# EUROPEAN PATENT APPLICATION

(11) **EP 4 611 117 A1**
(43) Date of publication of application: **03.09.2025**
(21) Application number: 23883109.3
(22) Date of filing: 26.10.2023
(51) Int. Cl.: H01M 10/54, H01M 10/0583, B09B 3/35, B09B 101/16

(54) **MATERIAL SEPARATION APPARATUS FOR RECYCLING WASTE BATTERY AND METHOD THEREFOR**

(30) Priority: 27.10.2022 KR 20220140525; 27.10.2022 KR 20220140526; 27.10.2022 KR 20220140527
(71) Applicant: With.Co., Ltd, Hwaseong-si, Gyeonggi-do 18512 (KR)
(72) Inventor: KIM, Eui Sick, Hwaseong-si Gyeonggi-do 18456 (KR)
(74) Representative: HGF
(86) International application number: PCT/KR2023/016696
(87) International publication number: WO 2024/091004

(57) **Abstract**

Disclosed is a material separation method for recycling a battery cell, the material separation method including: a disassembling operation of separating an electrode assembly from which a pouch has been removed from a battery cell into first electrode plates, second electrode plates, and a separator, in which the disassembling operation may include: a separator opening operation of opening the separator surrounding the electrode assembly; and a main disassembling operation of separating the first electrode plates and the second electrode plates from the electrode assembly in which the separator is opened.

## Description

### METHOD THEREFOR

### [Technical Field]

The present invention relates to a recycling technology for a waste battery, and more particularly, to a device and a method of automatically separating and recovering materials constituting a waste battery.

### [Background Art]

In general, lithium-ion battery (secondary battery) modules for vehicles are batteries of electric vehicles or hybrid vehicles, and when charging and discharging are repeated, the durability of use is limited to within a few years, and the batteries are discarded as waste batteries after use. In addition, lithium-ion batteries have a very high defect rate in the production process. As electric vehicles are widely distributed, the amount of waste batteries generated is expected to increase exponentially.

Therefore, a technology for recovering rare metals that may be recycled from these waste batteries needs to be urgently implemented.

In order to solve this problem, Korean Patent No. 10-0796369 proposes "Method of recovering valuable metals and renewable plastics from waste lithium ion batteries". According to the proposed literature, cobalt and copper, which are valuable metals with high added value, are concentrated and recovered from waste lithium ion secondary batteries by using a dry melting method, so that they may be recycled into high-purity metals. However, simply crushing and melting all waste lithium batteries consumes considerable energy required for melting, and adding various chemicals into the molten metal for smooth recovery causes waste of work due to complex processes and environmental pollution as well as damage to health of the workers.

### [Technical Problem]

The present invention has been made in an effort to provide a material separation apparatus and method for recycling waste batteries, which may separate a pouch-type battery cell having a Z-stacking structure by material.

The present invention has been made in an effort to provide a material separation apparatus and method for recycling waste batteries, which may easily and conveniently separate a negative electrode plate and an electrode plate from a separator.

The present invention has been made in an effort to provide a material separation apparatus and method for recycling waste batteries, which may easily separate an electrode plate (negative electrode plate or positive electrode plate) attached to a separator.

The present invention has been made in an effort to provide a material separation apparatus and method for recycling waste batteries, which may automate a process of separating negative electrode plates and positive electrode plates from a separator.

The problem to be solved by the present invention is not limited to the above-mentioned problems, and the problems not mentioned will be clearly understood by those skilled in the art from the present specification and the accompanying drawings.

### [Technical Solution]

An aspect of the present invention provides a material separation method for recycling a battery cell, the material separation method including: a disassembling operation of separating an electrode assembly from which a pouch has been removed from a battery cell into first electrode plates, second electrode plates, and a separator, in which the disassembling operation includes: a separator opening operation of opening the separator surrounding the electrode assembly; and a main disassembling operation of separating the first electrode plates and the second electrode plates from the electrode assembly in which the separator is opened.

Further, the separator opening operation may include: a primary unfold operation of holding and unfolding one end of the separator surrounding the electrode assembly; and a primary removal operation of separating an exposed first first electrode plate from the separator in a state where the separator is unfolded.

Further, the separator opening operation may include: an inverting operation of inverting the electrode assembly in a state where the first first electrode plate is removed; and a secondary unfold operation of holding and unfolding one end of the separator in the inverted electrode assembly.

Further, the main disassembling operation may be performed after the secondary unfold operation.

Further, the material separation method may further include a wet treatment operation of providing an electrode plate removal promoting solvent to the electrode assembly so that the first electrode plates and the second electrode plates are easily separated from the separator before the separator opening operation.

Further, in the main disassembling operation, the separator exposed on an upper surface of the electrode assembly may be held, pulled upwardly, and then wound in a roll form to be collected, and a first pressurizing roller may pressurize the separator from a front face to a rear face of the separator, and a second pressurizing roller may pressurize the separator from the rear face to the front face of the separator so that the first electrode plate may be separated from the rear face of the separator while the separator passes through the first pressurizing roller, and the second electrode plate may be separated from the front face of the separator while the separator passes through the second pressurizing roller.

Further, the disassembling operation may include injecting air to a point where the rear face of the separator is bent by the first pressurizing roller, and injecting air to a point where the front face of the separator is bent by the second pressurizing roller.

Another aspect of the present invention provides a material separation device for recycling a battery cell, the material separation device including: a separator opening part for opening a separator surrounding an electrode assembly from which a pouch has been removed from a battery cell; and a main disassembly unit for separating the first electrode plates and the second electrode plates from the electrode assembly in which the separator is opened, in which the separator opening part includes a first unfold part which holds and unfolds one end of the separator surrounding the electrode assembly.

Further, the separator opening part may further include a primary removal part for separating an exposed first first electrode plate from the separator in a state where the separator is unfolded.

Further, the separator opening part may include: an inverting part for inverting the electrode assembly in a state where the first first electrode plate is removed; and a second unfold part for holding and unfolding one end of the separator surrounding an upper surface of the electrode assembly inverted by the inverting part.

Further, the first unfold part and the second unfolded part may include: a support stage on which the electrode assembly is placed; and an unfold module for holding and unfolding the separator of the electrode assembly placed on the support stage.

Further, the first unfold part and the second unfolded part may further include a fixed adsorption part located on one side of the support stage and fixing the separator unfolded by the unfold module.

Further, the unfold module may include: a grip part for griping the separator; a vertical drive part for moving the grip part in a vertical direction; and a horizontal drive part for moving the vertical drive part in a horizontal direction.

Further, the grip part may include adsorption pads for vacuum-adsorbing the separator.

Further, the main disassembly unit may include: a crane part for pulling upwardly by holding an end of the separator exposed on an upper surface of the electrode assembly; a separator collection part for winding and collecting the separator lifted upwardly by the crane part in a roll form; a first pressurizing roller for pressurizing the separator from a front face to a rear face of the separator; a second pressurizing roller for pressurizing the separator from the rear face to the front face of the separator; a first injection nozzle for injecting air to a point where the rear face of the separator is bent by the first pressurizing roller; and a second injection nozzle for injecting air to a point where the front face of the separator is bent by the second pressurizing roller.

Further, the material separation device may further include a wet treatment part for providing an electrode plate removal promoting solvent to the electrode assembly so that the first electrode plates and the second electrode plates are easily separated from the separator.

Another aspect of the present invention provides a material separation method for recycling a battery cell, the material separation method including: a main disassembling operation of separating an electrode assembly from which a pouch has been removed from a battery cell into first electrode plates, second electrode plates, and a separator, in the main disassembling operation, a separator exposed on an upper surface of the electrode assembly may be held, pulled upwardly, and then wound in a roll form to be collected, and a first pressurizing roller may pressurize the separator from a front face to a rear face of the separator, and a second pressurizing roller may pressurize the separator from the rear face to the front face of the separator so that the first electrode plate may be separated from the rear face of the separator while the separator passes through the first pressurizing roller, and the second electrode plate may be separated from the front face of the separator while the separator passes through the second pressurizing roller.

Further, the main disassembling operation may include injecting air to a point where the rear face of the separator is bent by the first pressurizing roller, and injecting air to a point where the front face of the separator is bent by the second pressurizing roller.

Further, the material separation method may include when the separator is wound in the roll form and collected, a low-speed winding operation in which the separator is wound while rotating at a low speed, and a high-speed winding operation in which the separator is wound while rotating at a high speed.

Further, the high-speed winding operation may be performed after the low-speed winding operation.

Further, the material separation method may further include a separator opening operation of opening the separator surrounding the electrode assembly before the main disassembling operation.

Further, the separator opening operation may include: a primary unfold operation of holding and unfolding one end of the separator surrounding the electrode assembly; a primary removal operation of separating an exposed first first electrode plate from the separator in a state where the separator is unfolded; an inverting operation of inverting the electrode assembly in a state where the first first electrode plate is removed; and a secondary unfold operation of holding and unfolding one end of the separator in the inverted electrode assembly.

Further, the material separation method may further include a wet treatment operation of providing an electrode plate removal promoting solvent to the electrode assembly so that the first electrode plates and the second electrode plates are easily separated from the separator before the main disassembling operation.

Another aspect of the present invention provides a material separation device for recycling a battery cell, the material separation device including: a main disassembly unit for separating an electrode assembly from which a pouch has been removed from a battery cell into first electrode plates, second electrode plates, and a separator, in which the main disassembly unit includes: a crane part for pulling upwardly by holding an end of the separator exposed on an upper surface of the electrode assembly; a separator collection part for winding and collecting the separator lifted upwardly by the crane part in a roll form; a first pressurizing roller for pressurizing the separator from a front face to a rear face of the separator; and a second pressurizing roller for pressurizing the separator from the rear face to the front face of the separator.

Further, the main disassembly unit may include: a first injection nozzle for injecting air to a point where the rear face of the separator is bent by the first pressurizing roller; and a second injection nozzle for injecting air to a point where the front face of the separator is bent by the second pressurizing roller.

Further, the crane part may include: a grip part for gripping the separator; and a vertical drive part for vertically moving the grip part.

Further, the grip part may include: adsorption pads for vacuum-adsorbing the separator; and pincers for fixing the separator.

Further, the separator collection part may include: a rotary motor; a rotating plate rotated by the rotary motor; and a pair of reel rods disposed to be spaced apart from each other on the rotary plate and wound with the separator.

Further, when the separator is wound on the pair of reel rods, the separator collection part may rotate at a low speed, and then rotate at a high speed after the separator is wound on the pair of reel rods a predetermined number of times.

Further, the material separation device may further include a separator opening part for opening the separator surrounding the electrode assembly from which the pouch has been removed from the battery cell, in which the separator opening part may include a first unfold part which holds and unfolds one end of the separator surrounding the electrode assembly.

Further, the material separation device may further include a wet treatment part for providing an electrode plate removal promoting solvent to the electrode assembly so that the first electrode plates and the second electrode plates are easily separated from the separator.

Another aspect of the present invention provides a material separation method for recycling a battery cell, the material separation method including: a prior preparation operation of removing a pouch surrounding an electrode assembly of the battery cell; and a disassembling operation of separating the electrode assembly from which the pouch has been removed into first electrode plates, second electrode plates, and a separator, and the material separation method further comprises a wet treatment operation of providing an electrode plate removal promoting solvent to the electrode assembly so that the first electrode plates and the second electrode plates are easily separated from the separator before the disassembling operation.

Further, the prior preparation operation may include: a cutting operation of cutting an edge of the pouch surrounding the electrode assembly; a separating operation of separating an upper cover and a lower cover of the pouch in a state where the edge of the pouch is cut, and in the wet treatment operation, the electrode assembly from which the pouch has been removed may be treated.

Further, in the wet treatment operation, the electrode plate removal promoting solvent may be supplied to the electrode assembly from which the pouch has been removed, and the electrode plate removal promoting solvent may include water.

Further, in the wet treatment operation, the electrode plate removal promoting solvent may be provided through a nozzle or through a sponge soaked in the electrode plate removal promoting solvent, or the electrode assembly may be immersed in a water tank containing the electrode plate removal promoting solvent.

Further, the prior preparation operation may include: a discharge check operation of checking a discharge state of the battery cell before removing the pouch; an alignment operation of aligning the battery cell while performing the discharge check operation; and a flame detection operation of checking whether the battery cell has a flame.

Further, the prior preparation operation may further include a flame detection operation of checking whether the battery cell has a flame, and the cutting operation may include the flame detection operation, and the battery cell in which the flame is detected is immersed in a water tank and is treated.

Further, the disassembling operation may include: a separator opening operation of opening the separator surrounding the electrode assembly; and a main disassembling operation of separating the first electrode plates and the second electrode plates from the electrode assembly in which the separator is opened, and the separator opening operation may include: a primary unfold operation of holding and unfolding one end of the separator surrounding the electrode assembly; and a primary removal operation of separating an exposed first first electrode plate from the separator in a state where the separator is unfolded.

Further, the separator opening operation may include: an inverting operation of inverting the electrode assembly in a state where the first first electrode plate is removed; and a secondary unfold operation of holding and unfolding one end of the separator in the inverted electrode assembly, and the main disassembling operation may be performed after the secondary unfold operation.

Further, in the main disassembling operation, an end of the separator exposed on an upper surface of the electrode assembly may be held, pulled upwardly, and then wound in a roll form to be collected, and a first pressurizing roller may pressurize the separator from a front face to a rear face of the separator, and a second pressurizing roller may pressurize the separator from the rear face to the front face of the separator so that the first electrode plate may be separated from the rear face of the separator while the separator passes through the first pressurizing roller, and the second electrode plate may be separated from the front face of the separator while the separator passes through the second pressurizing roller.

Further, the disassembling operation may include injecting air to a point where the rear face of the separator is bent by the first pressurizing roller, and injecting air to a point where the front face of the separator is bent by the second pressurizing roller.

Another aspect of the present invention provides a material separation device for recycling a battery cell, the material separation device including: a prior preparation part for removing a pouch surrounding an electrode assembly of the battery cell; a disassembly part for separating the electrode assembly from which the pouch has been removed into first electrode plates, second electrode plates, and a separator; and a wet treatment part for providing an electrode plate removal promoting solvent to the electrode assembly so that the first electrode plates and the second electrode plates are easily separated from the separator in the disassembly part.

Further, the prior preparation part may include: a cutting part for cutting an edge of the pouch surrounding the electrode assembly; and a cover separation part for separating an upper cover and a lower cover of the pouch in a state where the edge is cut.

Further, the wet treatment part may supply the electrode plate removal promoting solvent to the electrode assembly from which the pouch has been removed, and the electrode plate removal promoting solvent may include water.

Further, the wet treatment part may employ any one of a method of injecting the electrode plate removal promoting solvent toward the electrode assembly by using a nozzle, a method of contacting the electrode assembly with a sponge soaked in the electrode plate removal promoting solvent, and a method of immersing the electrode assembly in a water tank filled with the electrode plate removal promoting solvent.

Further, the prior preparation part may include: a discharge check part for checking whether the battery cell is discharged; an aligning part for aligning the battery cells before cutting the battery cells; and a flame detection means for detecting whether the battery cell has a flame.

Further, the cutting part may cut the edge of the pouch by using a circular rotary cutter blade, and the material separation device may further include a flame detection means to check whether the battery cell has a flame, and the battery cell where the flame is detected may be pushed into a water tank containing water to prevent fire.

Further, the disassembly part may include: a separator opening part for opening the separator surrounding the electrode assembly; and a main disassembly unit for separating the first electrode plates and the second electrode plates from the electrode assembly in which the separator is opened, and the separator opening part may include: a first unfold part for holding and unfolding one end of the separator surrounding the electrode assembly; and a primary removal part for separating an exposed first first electrode plate from the separator in a state where the separator is unfolded.

Further, the separator opening part may include: an inverting part for inverting the electrode assembly in a state where the first first electrode plate is removed; and a secondary unfold part for holding and unfolding one end of the separator surrounding the upper surface of the electrode assembly, which has been inverted by the inverting part.

Further, the main disassembly unit may include: a crane part for pulling upwardly by holding an end of the separator exposed on an upper surface of the electrode assembly; a separator collection part for winding and collecting the separator lifted upwardly by the crane part in a roll form; a first pressurizing roller for pressurizing the separator from a front face to a rear face of the separator; a second pressurizing roller for pressurizing the separator from the rear face to the front face of the separator; a first injection nozzle for injecting air to a point where the rear face of the separator is bent by the first pressurizing roller; and a second injection nozzle for injecting air to a point where the front face of the separator is bent by the second pressurizing roller.

### [Advantageous Effects]

According to the embodiment of the present invention, it is possible to separate a pouch-type battery cell having a Z-stacking structure by material.

According to the embodiment of the present invention, a recovery rate of rare metals may be increased by separating/collecting a separator, a negative electrode, and an electrode plate separately without using a chemical substance.

According to the embodiment of the present invention, separation of an electrode plate (negative electrode plate or positive electrode plate) attached to the separator is easy.

According to the embodiment of the present invention, the recovery rate of rare metals included in waste batteries is maximized at low cost and a simple and stable separation process compared to the existing method, thereby contributing to overall environmental pollution prevention and national competitiveness.

The effect of the present invention is not limited to the foregoing effects, and the not-mentioned effects will be clearly understood by those skilled in the art from the present specification and the accompanying drawings.

### [Description of Drawings]

FIG. 1 is a perspective view illustrating a pouch type battery cell.
FIG. 2 is a cross-partial view of a battery cell taken along line A-A illustrated in FIG. 1.
FIG. 3 is a diagram illustrating different types of a pouch type battery cell.
FIG. 4 is a block diagram illustrating a material separation device for a battery cell according to an embodiment of the present invention.
FIG. 5 is a configuration diagram for describing a prior preparation part illustrated in FIG. 4.
FIGS. 6 and 7 are diagrams for describing a stage on which a battery cell is placed and a moving jig for moving the battery cell.
FIG. 8 is a diagram for describing a wet treatment part.
FIGS. 9 and 10 are diagrams for describing a cutting part.
FIGS. 11 and 12 are diagrams for describing a cover separation part.
FIG. 13 is a configuration diagram for describing a disassembly part illustrated in FIG. 4.
FIG. 14 is a diagram for describing a first unfold part.
FIGS. 15 to 20 are diagrams for describing a process of opening a separator in a separator opening part operation by operation.
FIGS. 21 and 22 are diagrams for describing a main disassembly unit.
FIGS. 23 and 24 are diagrams for describing a grip part.
FIGS. 25 to 29 are diagrams illustrating a main disassembly process in which negative electrode plates and positive electrode plates are separated from a separator in a main disassembly unit operation by operation.
FIG. 30 is an enlarged view of a main part for describing a process of separating a negative electrode plate and a positive electrode plate.
FIG. 31 is a diagram illustrating another example of the cutting part.
FIG. 32 is a diagram illustrating separation of the negative electrode plate and the positive electrode plate by using a scraper.

### [Best Mode]

Other advantages and features of the present invention, and a method of achieving them, will become apparent with reference to the detailed exemplary embodiment below in conjunction with the accompanying drawings. However, the present invention is not limited to the exemplary embodiments below, and the present invention is only defined by the scope of the claims. Unless defined, all terms (including technical or scientific terms) used herein have the same meaning as commonly accepted by common technology in the prior art to which this invention belongs. A general description of known configurations may be omitted so as not to obscure the gist of the present invention. In the drawings of the present invention, the same reference numerals are used as far as possible for the same or corresponding components. To help understanding of the present invention, some configurations in the drawings may be illustrated somewhat exaggerated or reduced.

Terms used in the present application are used only to describe specific exemplary embodiments, and are not intended to limit the present invention. Singular expressions used herein include plurals expressions unless they have definitely opposite meanings in the context. In the present application, it will be appreciated that terms "including" and "having" are intended to designate the existence of characteristics, numbers, operations, operations, constituent elements, and components described in the specification or a combination thereof, and do not exclude a possibility of the existence or addition of one or more other characteristics, numbers, operations, operations, constituent elements, and components, or a combination thereof in advance.

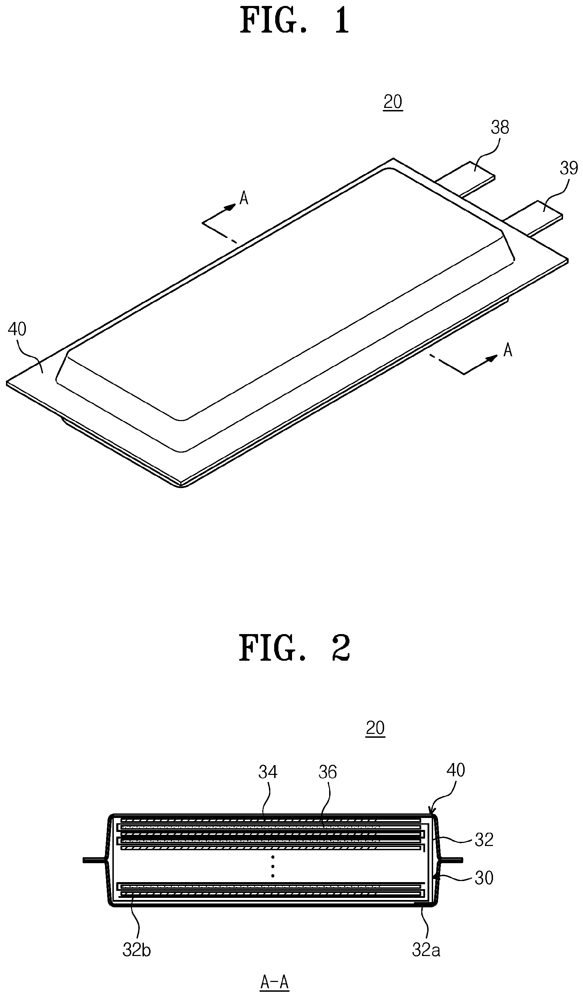

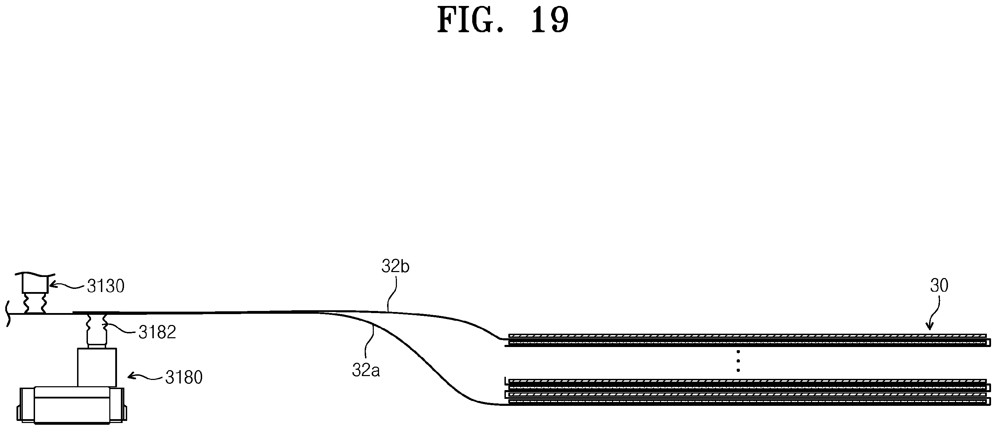

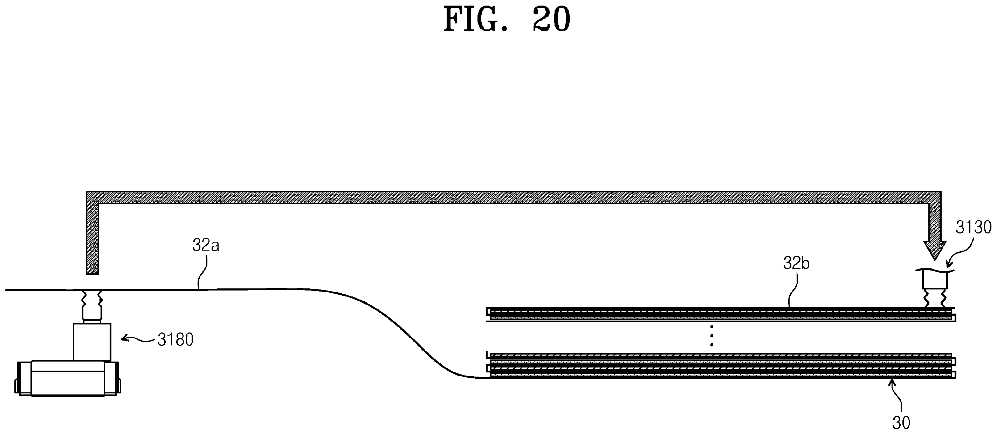

Hereinafter, an exemplary embodiment of the present invention will be described in detail with reference to FIGS. 1 to 32.

Before describing a material separation device 10 of a battery cell according to an embodiment of the present invention, a battery cell to be separated from the material separation device 10 of the battery cell has the following structure.

FIG. 1 is a perspective view illustrating a pouch type battery cell, and FIG. 2 is a cross-partial view of a battery cell taken along line A-A illustrated in FIG. 1.

As illustrated in FIGS. 1 and 2, the battery cell 20 may include a pouch 40 and an electrode assembly 30 received within the pouch 40. Here, the electrode assembly 30 has a Z-stacking structure in which separators 32 are stacked in a zigzag manner, and positive electrode plate 36 and negative electrode plates 34 are inserted between the separators 32. Reference numerals 38 and 39 are positive electrode tabs and negative electrode tabs that are exposed outside the pouch.

The pouch 40 is made of metal including aluminum, and may include a film coating layer of an electrically insulating polymeric material for electrical insulation. The pouch 40 receives the electrode assembly 30 therein and provides a receiving space that is filled with an electrolyte (not illustrated).

The electrode assembly 30 includes a plurality of positive electrode plates 36 and negative electrode plates 34 and one sheet of separator 32 disposed therebetween. The separator 32 is ultimately formed to wrap around the entire assembly once. Here, an end of the separator 32 that is exposed to the outside is referred to as a first end 32a and the other end is defined as the second end 32b.

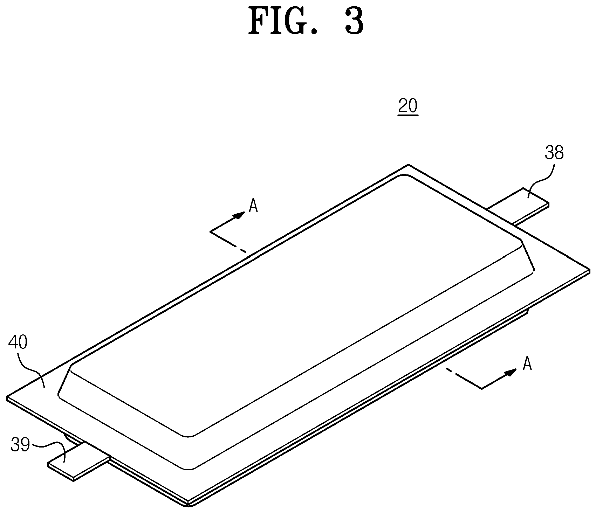

As illustrated in FIG. 3, the battery cell 20 may also be a type in which a positive electrode tab 38 and a negative electrode tab 39 are provided on opposite sides, respectively.

As the electrode assembly 30 described above may be of any conventional configuration, a detailed description thereof will be omitted.

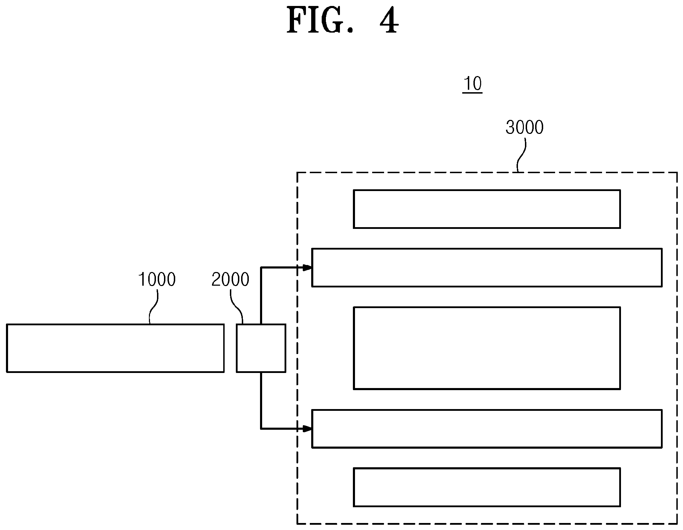

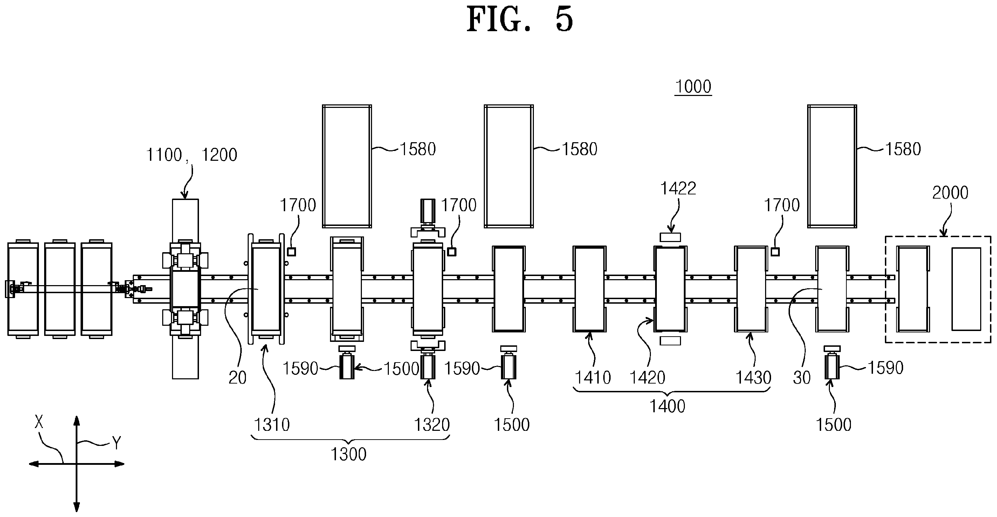

FIG. 4 is a block diagram illustrating the material separation device for a battery cell according to an embodiment of the present invention, and FIG. 5 is a configuration diagram for describing a prior preparation part illustrated in FIG. 4.

Referring now to FIGS. 4 and 5, the material separation device 10 for the battery cell according to the embodiment of the present invention may include a prior preparation part 1000, a wet treatment part 2000 and a disassembly part 3000. In this embodiment, the disassembly part 3000 may be arranged in two rows. In the wet treatment part 2000, the wet-treated electrode assemblies may be provided to the two disassembly parts 3000 sequentially.

The prior preparation part 1000 removes the pouch 40 that encloses the electrode assembly 30 of the battery cell 20.

The disassembly part 3000 separates the electrode assembly 30 with the pouch 40 removed into a first electrode plate 34 (hereinafter referred to as the negative electrode plate) and a second electrode plate 36 (hereinafter referred to as the positive electrode plate) and a separator 32, respectively.

The wet treatment part 2000 may be provided between the prior preparation part 1000 and the disassembly part 3000. The wet treatment part 2000 may provide the electrode assembly 30 with an electrode plate removal promoting solvent to facilitate separation of the negative electrode plates 34 and the positive electrode plates 36 from the separator 32 in the disassembly part 3000. In one example, the electrode plate removal promoting solvent may include water. Battery cells that are discarded at the end of their useful life (or battery cells that are discarded due to failure in use) often have the negative electrode plate 34 and the positive electrode plate 36 stuck to the separator 32. When the negative electrode plate 34 and the positive electrode plate 36 are stuck to the separator 32, it is not easy to separate the electrode plates 34 and 36 (negative electrode plate, positive electrode plate) from the separator 32.

To overcome these problems, the present invention performs a wet-treatment process in which water is provided from the wet treatment part 2000 to the separator 32 of the electrode assembly 30 just prior to the disassembly process. The water wets the separator 32, penetrates the separator 32, and flows between the separator 32 and the electrode plates 34 and 36. The water infiltrating between the separator 32 and the electrode plates 34 and 36 acts to facilitate separation of the separator 32 and the electrode plates 34 and 36.

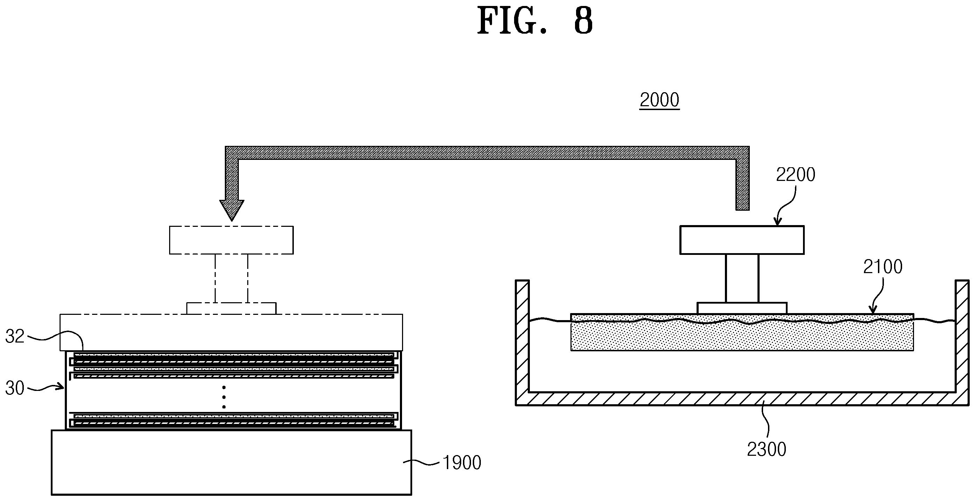

The wet treatment part 2000 may wet-treat the electrode assembly 30 in a variety of ways. As illustrated in FIG. 8, the wet treatment part 2000 according to the present embodiment may wet-treat the separator 32 of the electrode assembly 30 by contacting a water-soaked sponge 2100 with the top surface of the electrode assembly 30. The sponge 2100 may be provided in the form of a square pad having a larger area than the electrode assembly 30. However, the shape of the sponge 2100 is not limited to this, and may also be provided in the shape of a roller-shaped sponge. The sponge 2100 may be held in a waiting area and returned to the waiting area by a drive means 2200 after contacting the top surface (separator) of the electrode assembly 30. The waiting place may be provided with a water tank 2300 containing water, and the sponge 2100 may absorb water while waiting.

Alternatively, the wet treatment part 2000 may employ a method of injecting an electrode plate removal promoting solvent (water) to the electrode assembly by using a nozzle or a method of immersing the electrode assembly in a bath filled with an electrode plate removal promoting solvent. For reference, excessive water supply to the electrode assembly is undesirable.

Referring again to FIGS. 4 and 5, the prior preparation part 1000 includes a discharge check part 1100 for checking whether the battery cells 20 is discharged, an aligning part 1200 for aligning the battery cells prior to cutting the pouch, a cutting part 1300 for cutting the edge of the pouch 40 enclosing the electrode assembly 20, a cover separation part 1400 for separating an upper cover 42 and a lower cover 44 of the pouch 40 with the edges cut, and an idler part 1500 where the battery cells (or electrode assembly) wait for a time.

A plurality of idler parts 1500 may be provided. Each of the treatment parts 1100 to 1500 of the prior preparation part 1000 may be arranged in a unidirectional manner.

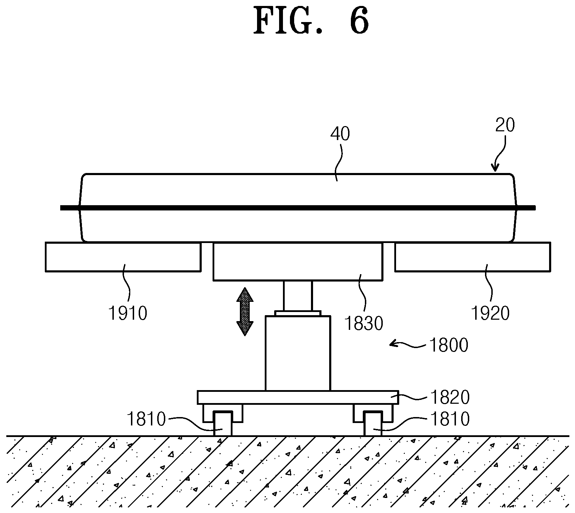

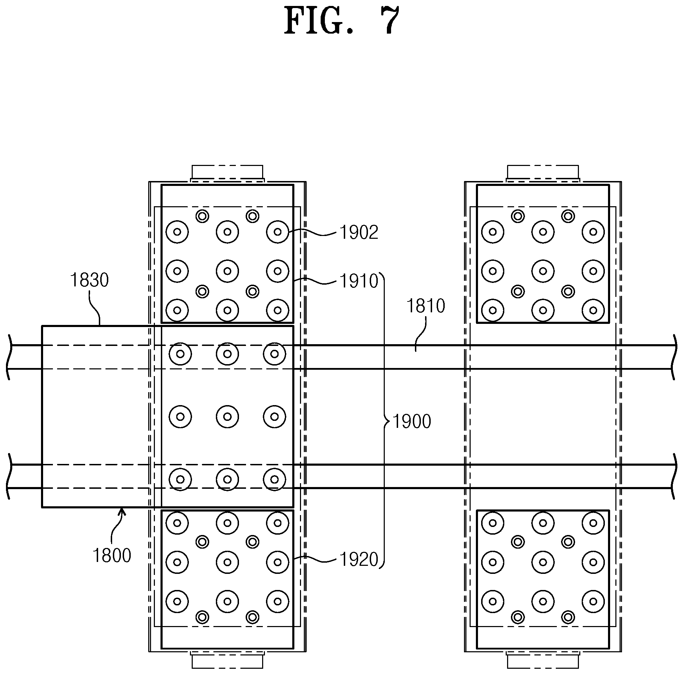

FIGS. 6 and 7 are diagrams for describing a stage on which a battery cell is placed and a moving jig for moving the battery cell.

As illustrated in FIGS. 6 and 7, the battery cell 20 (or electrode assembly) may be subjected to each processing treatment while being seated on a stage 1900 having vacuum suction holes 1902 formed on its upper surface. The stage 1900 may be provided for each of the discharge check part 1100, the cutting part 1300, the cover separation part 1400, and the idler part 1500. The stage 1900 includes a left stage 1910 and a right stage 1920, which may be spaced apart from each other. Moving the battery cells 20 (or electrode assemblies) between the stages may be accomplished by a moving jig 1800.

The moving jig 1800 may include a guide rail 1810 installed in the X-axis direction, a moving body 1820 movable along the guide rail 1810 in the X-axis direction, and a lifting stage 1830 movable up and down on the moving body 1820. The lifting stage 1830 may be positioned in a space between the left stage 1910 and the right stage 1920. The lifting stage 1830 includes vacuum suction holes 1832 on its upper surface. The lifting stage 1830 may be operable to lift the battery cell from the stage 1900 while supporting the battery cell 20 placed on the stage 1900. The lifting stage 1830 may move horizontally with the battery cell 20 lifted from the stage 1900 to place the battery cell 20 on a neighboring stage 1900.

In the present embodiment, the battery cells 20 are described as being moved to their respective stages 1900 by the moving jig, but the present invention is not limited thereto. In another example, the moving jig may be omitted and the stage 1900 may be provided to move in the X-axis direction, in which case the battery cells 20 may be moved sequentially through each of the treatment parts of the prior preparation part while being placed on the stage 1900.

The discharge check part 1100 and the aligning part 1200 may be provided together. The operation of checking whether the battery cells 20 are discharged and the operation of aligning the battery cells 20 may be performed sequentially in the state where the battery cells 20 are positioned in one position. The alignment and the discharge check may be performed in any order.

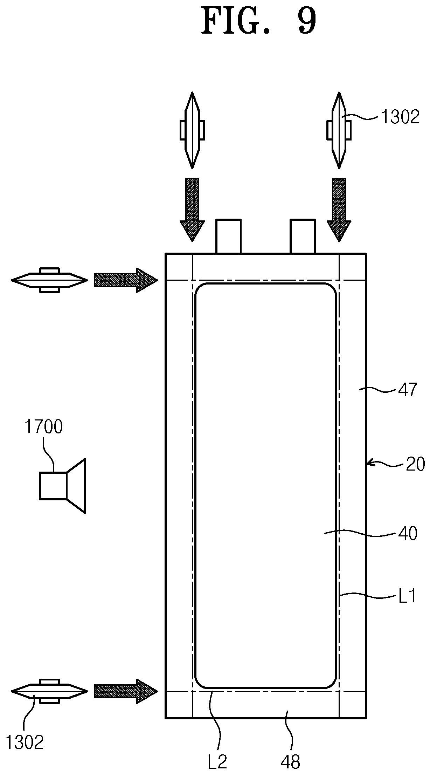

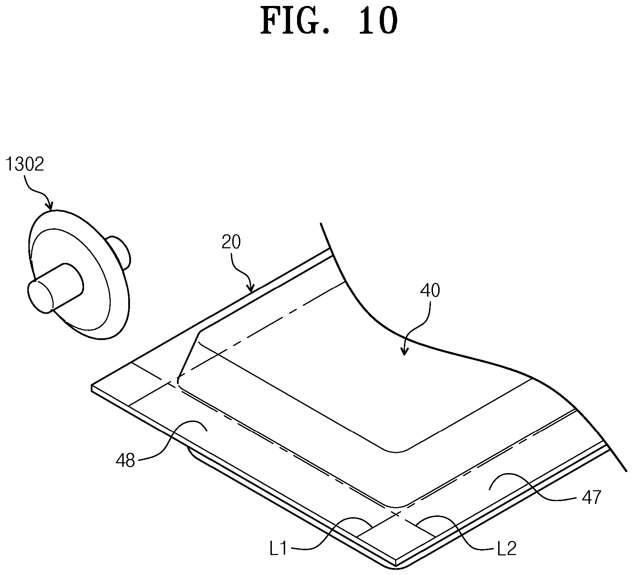

FIGS. 9 and 10 are diagrams for describing the cutting part.

Referring to FIGS. 4, 9, and 10, the cutting part 1300 may be divided into a side cutting part 1310 and a terrace cutting part 1320. The side cutting part 1310 cuts a left and right edges 47 (referred to as the side) of the pouch 40, and the terrace cutting part 1320 cuts a front and rear edge 48 (referred to as the terrace) of the pouch 40. The side cutting part 1310 and the terrace cutting part 1320 may include circular cutter blades 1302. The cutter blades 1302 cut the edges of the pouch 40 while moving along cutting lines L1 and L2 of the pouch 40. As another example, the cutting part 1300 may include a laser-activated cutter.

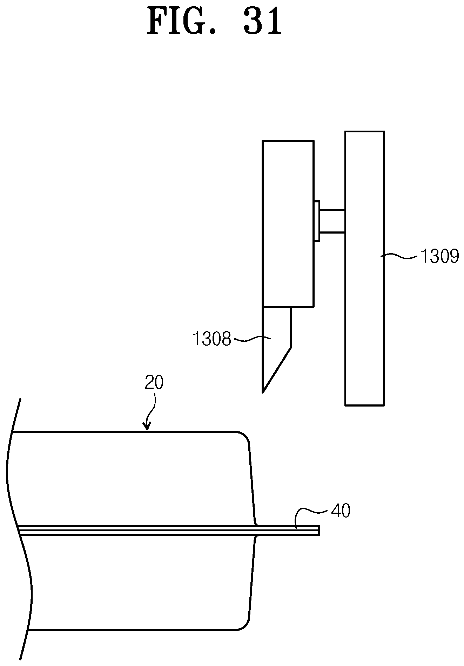

FIG. 31 is a diagram illustrating another example of the cutting part, in which the cutter blade may cut the edge of the pouch 40 in a cutting manner using a shearing blade 1308 that is lifted by a drive part 1309.

In the cutting part 1300, sparks are likely to be generated when the edge of the pouch 40 are cut by the cutter blade 1302. Therefore, each of the side cutting part 1310 and the terrace cutting part 1320 is provided with a flame detection means 1700 to check whether the battery cell is flamed. When the flame detection means 1700 checks whether a flame is generated, the battery cell that is detected to have a flame is pushed into the water tank 1580 containing water. After cutting, the battery cell is transferred to the idler part 1500, and the flame detected battery cell is immersed in the water tank 1580 of the idler part 1500. The idler part 1500 may include a pusher 1590 for pushing the battery cell into the water tank 1580. The flame detection means 1700 may also be provided in the cover separation part 1400.

In the present embodiment, the water tank 1580 and the pusher 1590 are illustrated to be provided in the idler part 1500, but the present invention is not limited thereto. As another example, the water tank 1580 and the pusher 1590 may be provided in the side cutting part 1310 and the terrace cutting part 1320, respectively. In other words, the idler part 1500 may be configured to stop cutting and push the battery cell 20 into the water tank 1580 when a flame is detected during the cutting process.

The idler part 1500 may be disposed adjacent to the side cutting part 1310, the terrace cutting part 1320, and the cover separation part 1400.

In the present embodiment, the cutting part 1300 is illustrated and described as having the side cutting and terrace cutting performed in separate independent units, but the present invention is not limited thereto. As another example, the side cutting part 1310 may include cutter blades that may cut the side and the terrace sequentially without being repositioned. In this case, the terrace cutting part may be omitted.

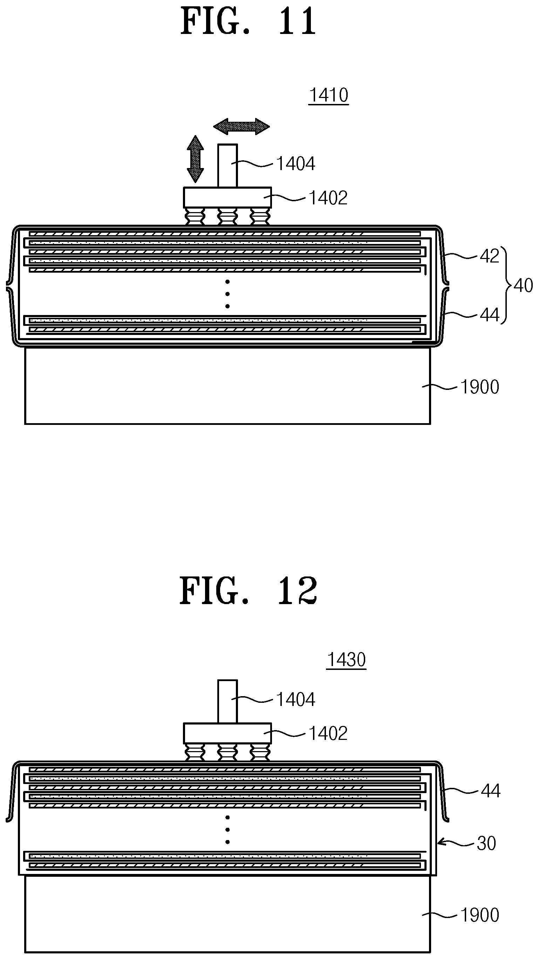

FIGS. 11 and 12 are diagrams for describing the cover separation part.

Referring to FIGS. 4, 11, and 12, the cover separation part 1400 separates the upper cover 42 and the lower cover 44 of the pouch 40 in the state where the terrace of the pouch 40 is cut.

The cover separation part 1400 may include a first separation part 1410, an inverting part 1420, and a second separation part 1430.

The first separation part 1410 removes the upper cover 42 of the pouch 40 from the battery cell 20, and the second separation part 1430 removes the lower cover 44 of the pouch 40 from the battery cell 20.

The first separation part 1410 and the second separation part 1430 include a vacuum pad 1402. The upper cover 42 and the lower cover 44 may each be suction-fixed by the vacuum pad 1402 and removed from the battery cell 20. The vacuum pad 1402 may be provided to be moved in an up, down, left and right direction by a drive means 1404.

The inverting part 1420 may include an inverting part 1422 that inverts the battery cell 20 with the top cover 42 removed by 180 degrees. The inverting part 1422 may rotate the battery cell 20 180 degrees while fixing opposite ends of the battery cell 20, and then place the battery cell 20 back down on the stage 1900. A detailed description of the inverting part 1422 will be omitted.

The electrode assembly 30 with the pouch 40 removed is then moved to the wet treatment part 2000 and then is wet-treated. The wet-treated electrode assembly 30 is then supplied to the disassembly part 3000.

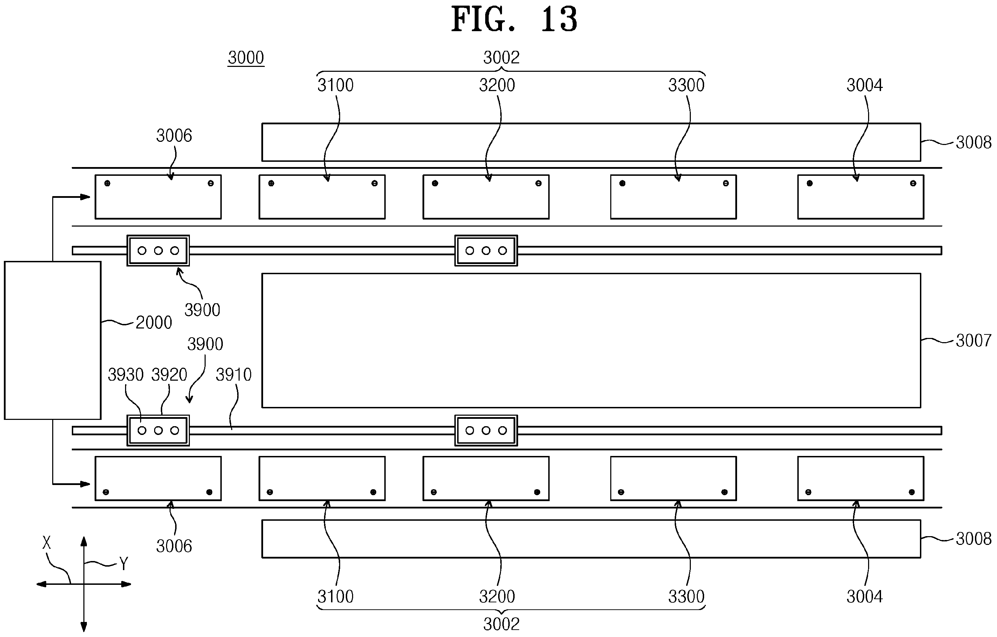

FIG. 13 is a configuration diagram for describing the disassembly part illustrated in FIG. 4.

Referring to FIG. 13, the disassembly part 3000 may include a separator opening part 3002 and a main disassembly unit 3004. Between the separator opening part 3002 and the wet treatment part 2000, a waiting part 3006 may be provided where the electrode assembly 30 temporarily waits.

The disassembly part 3000 may include a transfer jig 3900 for transferring the electrode assembly 30 between the waiting part 3006, the separator opening part 3002, and the main disassembly unit 3004.

In one example, the transfer jig 3900 may include a guide rail 3910 installed in the X-axis direction, a moving body 3920 movable along the guide rail 3910 in the X-axis direction, and a lifting stage 3930 installed on the moving body 3920, in which the lifting stage 3930 may be provided to be horizontally movable in the Y-axis and vertically movable. The structure of the transfer jig 3900 is not limited to the present embodiment, and may be provided in various forms to transfer the electrode assembly.

The separator opening part 3002 may include a first unfold part 3100, an inverting part 3200, and a second unfold part 3300.

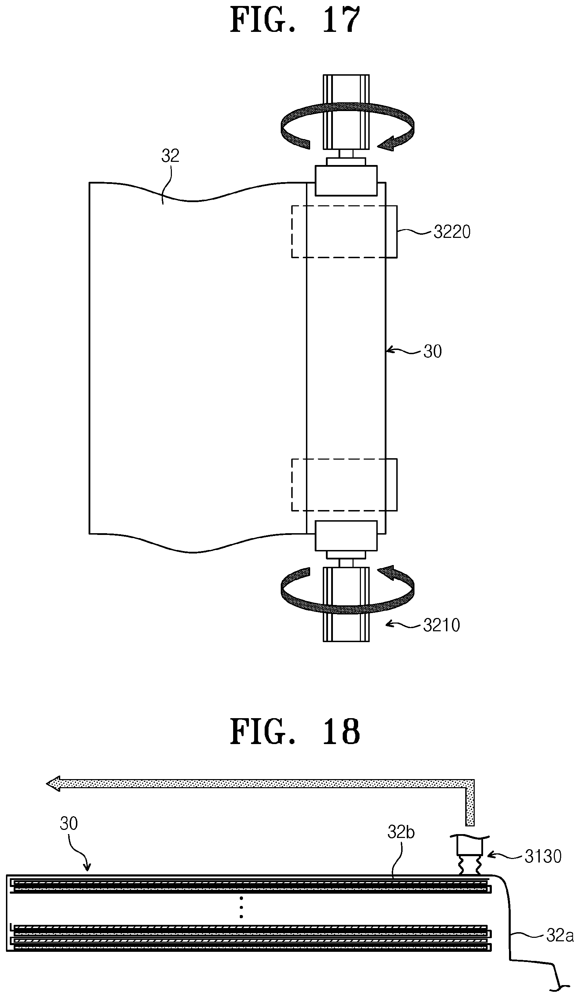

In the first unfold part 3100, an unfolding operation is performed to hold and unfold the first end 32a of the separator 32 surrounding the electrode assembly 30. In the inverting portion 3200, an operation is performed to invert the electrode assembly 30 with the separator 32 open by 180 degrees. The inverting portion 3200 may include an inverting part 3210 (see FIG. 17) that holds opposite ends of the electrode assembly 30 and flips the electrode assembly 30 180 degrees. The inverting part 3210 may hold the opposite ends of the electrode assembly 30 placed on the stage 3220, move to a predetermined height, invert the electrode assembly 30, and then place the inverted electrode assembly 30 back down on the stage 3220. A detailed description of the inverting part 1320 will be omitted.

The inverted electrode assembly 30 in the inverting part 3200 is moved to the second unfold part 3300. In the second unfold part 3300, an unfolding operation is performed in which the first end 32a of the separator 30 wrapped around the top surface of the electrode assembly 30 inverted in the inverting part 3200 is held and unfolded.

The first unfold part 3100 and the second unfold part 3200 have the same device configuration. In the present embodiment, the first unfold part 3100 is described and the description of the second unfold part is omitted.

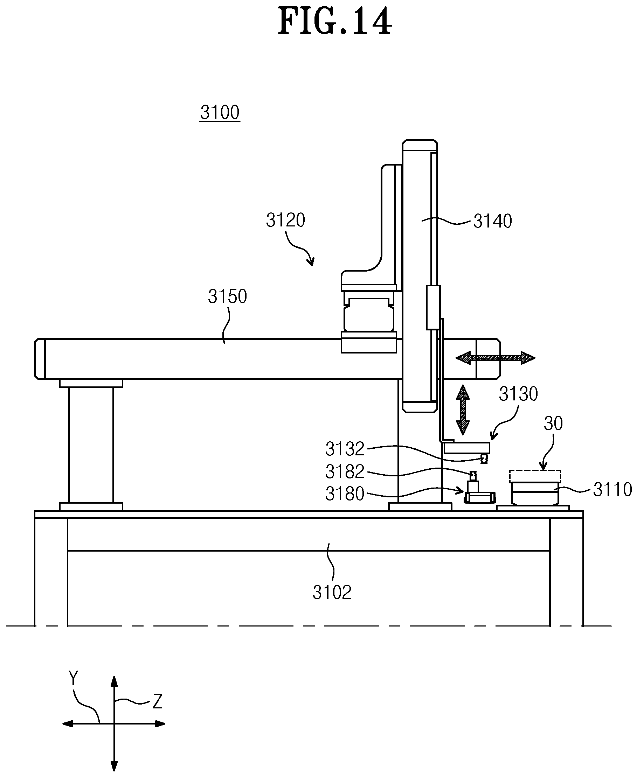

Referring to FIG. 14, the first unfold part 3100 may include a frame 3102, a support stage 3110, an unfold module 3120, and a fixed adsorption part 3180.

The support stage 3110 may be loaded with the electrode assembly 30. The support stage 3110 has substantially the same configuration as the stage 1900 illustrated in FIG. 6. The support stage 3110 may include vacuum holes (not illustrated) on its upper surface for vacuum adsorbing and fixing the electrode assembly 30.

The unfold module 3120 may include a grip part 3130 for gripping the separator 32 of the electrode assembly 30, a vertical drive part 3140 for moving the grip part 3130 in a vertical direction, and a horizontal drive part 3150 for moving the vertical drive part 3140 in a Y-axis direction. The grip part 3130 includes an adsorption pad 3132 that vacuum adsorbs the separator.

The fixed adsorption part 3180 is positioned on one side of the support stage 3110 and includes adsorption pads 3182 to fix the separator 32 that has been unfolded by the grip part 3130.

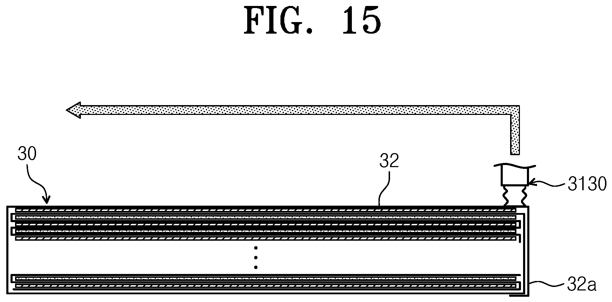

FIGS. 15 to 20 are diagrams for describing a process of opening a separator in the separator opening part operation by operation.

The process of opening the separator may include a primary unfold operation, an inverting operation, and a secondary unfold operation.

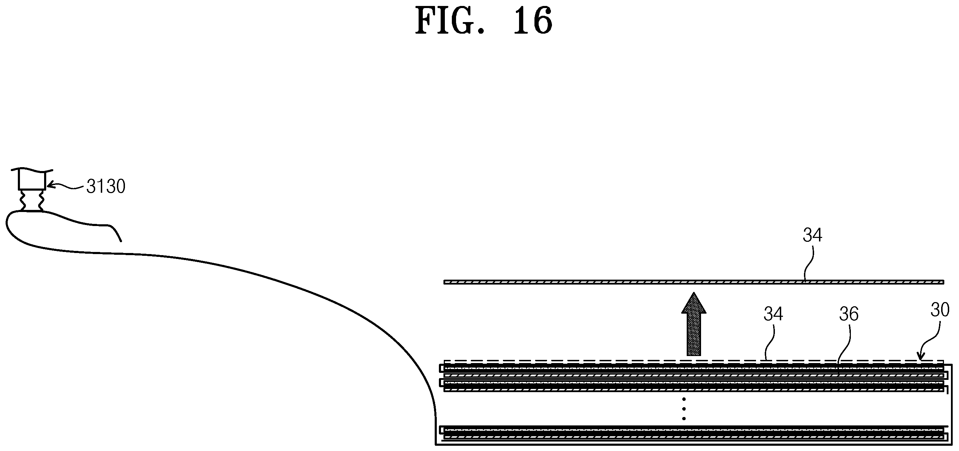

Referring to FIGS. 15 and 16, in the primary unfold operation, the grip part 3130 holds the first end 32a of the separator wrapped around the electrode assembly 30 and unfold the separator in the opposite direction (the direction indicated by the arrow). When the separator 32 is unfolded, the first negative electrode plate 34 is exposed. The exposed negative electrode plate 34 is separated from the electrode assembly 30 by a separate primary removal part (removal means). The primary removal part suctions the top surface of the cathode plate 34 with a vacuum to separate the negative electrode plate 34 from the electrode assembly 30. The separated negative electrode plate may be collected in a separate collection part. The primary unfold operation is processed in the first unfold part 3100.

Referring to FIG. 17, in the inverting operation, the inverting part 3210 grips opposite ends of the electrode assembly 30 placed on the stage 3220. The inverting part 3210 moves the electrode assembly 30 by a predetermined height from the stage 3220 and then inverts the electrode assembly 30. The inverting part 3210 then places the electrode assembly 30 back down on the stage 3220. The inverting operation is processed in the inverting part 3200.

Referring to FIGS. 18 to 20, in the secondary unfold operation, the grip part 3130 holds the first end 32a of the separator in the inverted electrode assembly 30 and unfold the separator in the opposite direction (the direction indicated by the arrow in FIG. 18). In this case, the fixed adsorption part 3180 adsorbs and fixes the unfolded separator 32 in vacuum. During the secondary unfolding process, the second end 32b of the separator 32 may also be taken along with the first end 32a. In this case, the grip part 3130 vacuum adsorbs the second end 32b of the separator 32 and moves the second end 32b into its original position. The secondary unfold operation is processed in the second unfold part 3300.

After the secondary unfold operation, the electrode assembly 30 is provided to the main disassembly unit 3004.

In the main disassembly unit 3004, a main disassembly process is performed to separate the negative electrode plates 34 and the positive electrode plates 36 from the electrode assembly 30 with the separator 32 open.

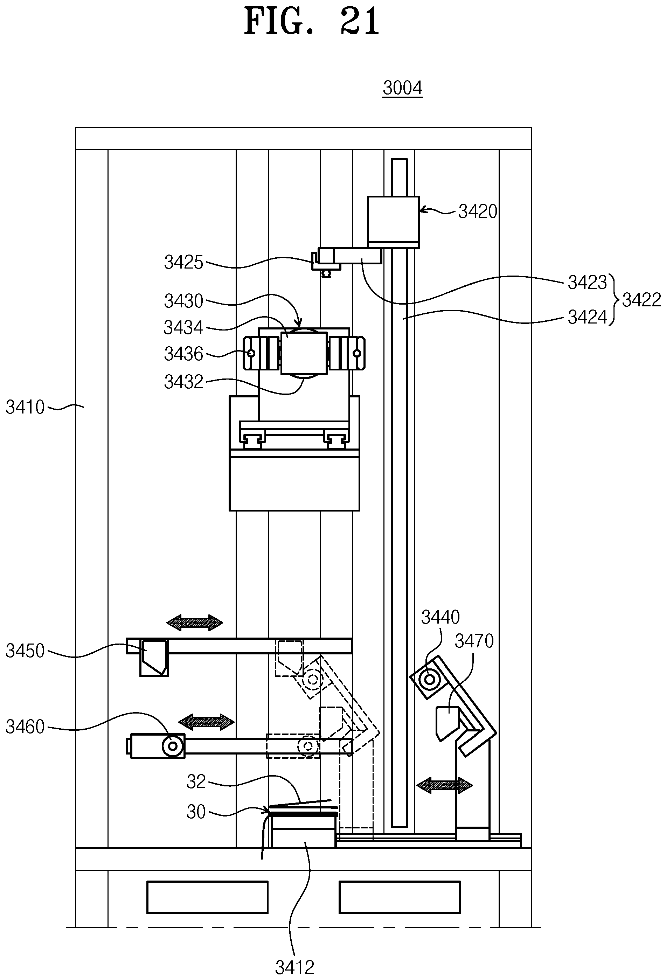

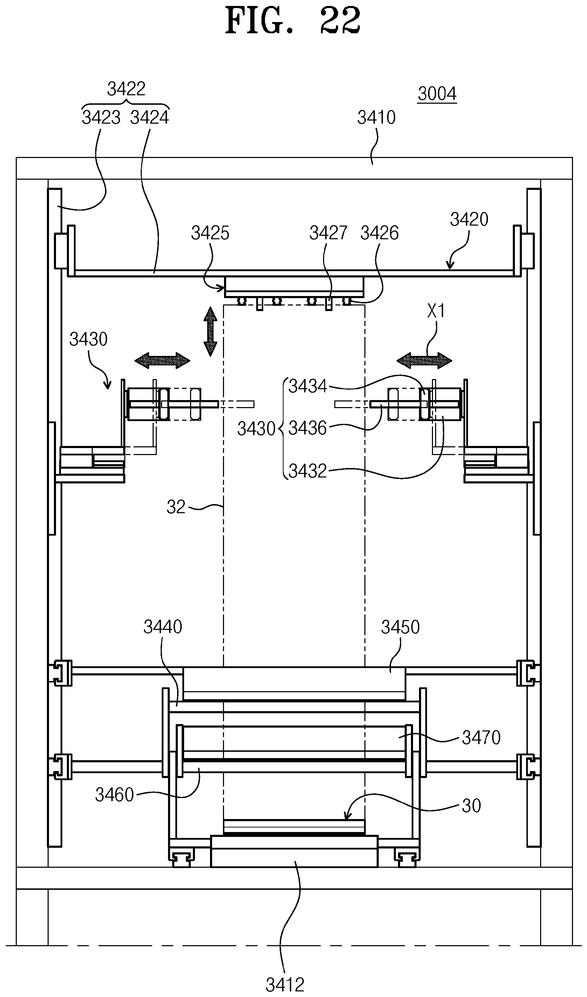

FIGS. 21 and 22 are diagrams for describing the main disassembly unit.

Referring to FIGS. 21 and 22, the main disassembly unit 3004 may include a frame 3410, a stage 3412, a crane part 3420, a separator collection part 3430, a first pressurizing roller 3440, a second pressurizing roller 3460, a first injection nozzle 3450 and a second injection nozzle 3470.

The stage 3412 may be installed at the bottom of the frame 3410. The electrode assembly 30 is seated on the stage 3412, and the electrode assembly 30 may be fixed by vacuum pressure.

The crane part 3420 is a device for holding and pulling upwardly one end 32b of the separator exposed by the top surface of the electrode assembly 30. The crane part 3420 may include a grip part 3425 and a vertical drive part 3422. The vertical drive part 3422 may include guide rails 3423 symmetrically installed on opposite sides of the frame 3410 and a moving bar 3424 installed to be liftable along the guide rail 3423. The grip part 3425 may be installed on the moving bar 3424.

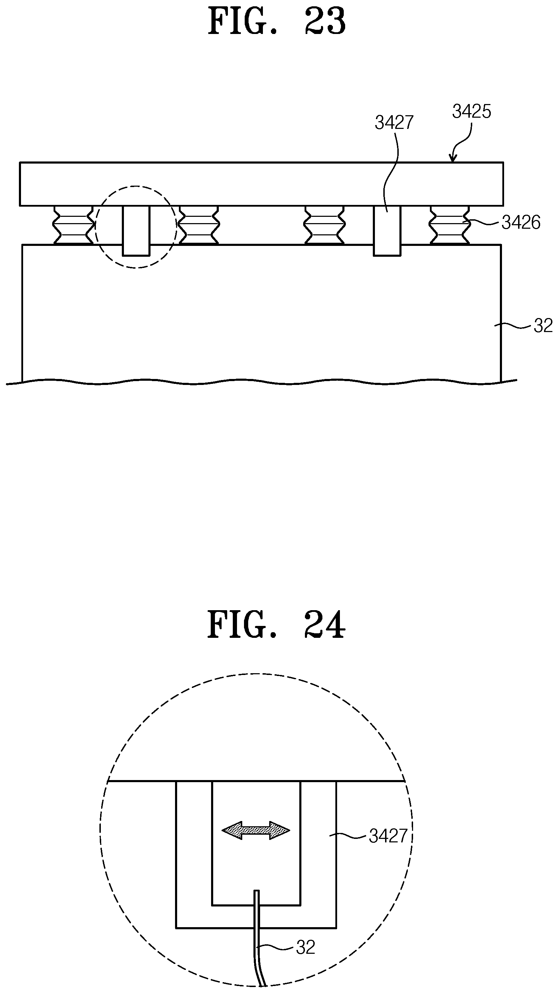

FIGS. 23 and 24 are diagrams for describing the grip part.

As illustrated in FIGS. 23 and 24, the grip part 3425 may include adsorption pads 3426 that vacuum adsorb the separator and pincers 3427 that fix the separator. The grip part 3425 has difficulty pulling the separator 32 using only the adsorption force of the adsorption pads 3426, and to compensate for this, the grip part 3425 adds the pincers 3427 for gripping the separator 32.

Referring again to FIGS. 21 and 22, the separator collection part 3430 collects the separator 32 lifted upwardly by the crane part 3420 by winding the separator 32 into a roll. The separator collection parts 3430 may be provided symmetrically on opposite sides of the frame 3410. The separator collection part 3430 may include a rotary motor 3432, a rotary plate 3434 rotated by the rotary motor 3432, and a pair of reel rods 3436 spaced apart from each other on the rotary plate 3434. The separator collection part 3430 may be moved in the direction of the arrow X1 illustrated in FIG. 22. For example, the separator collection part 3430 waits in a first position (see FIG. 22) while the grip part 3425 holds and pulls the separator 32 to avoid interference with the grip part 3425. Then, after the grip part 3425 is moved to a position higher than the separation collection part 3430, the separator collection part 3430 is moved from the first position to a second position (see FIG. 22). For example, in FIG. 22, the first position may be the position indicated by the solid line, and the second position may be the position indicated by the dashed line. When the separation collection part 3430 is moved to the second position, the separator 32 passes between a pair of reel rods 3436. The grip part 3425 releases the separator 32 when the separator 32 has been wound a predetermined number of times around the separator collection part 3430.

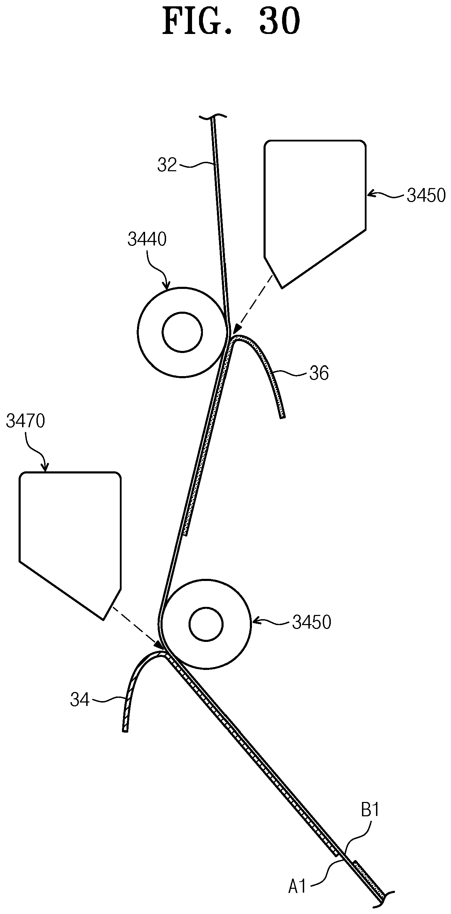

The first pressurizing roller 3440 may be provided to pressurize the separator 32 from a front face A1 (illustrated in FIG. 30) towards a rear face B1 (illustrated in FIG. 30). The first injection nozzle 3450 may be provided to inject air to the point where the rear face B1 of the separator 32 is bent by the first pressurizing roller 3440. For reference, the negative electrode plate 34 is attached to the front face A1 of the separator 32, and the positive electrode plate 36 is attached to the back face B1.

The second pressurizing roller 3460 may be provided to pressurize the separator 32 from the back face B1 of the separator 32 towards the front face A1. The second injection nozzle 3470 may be provided to inject air to the point where the front face A1 of the separator 32 is bent by the second pressurizing roller 3460.

When the separator 32 is unfolded, the first pressurizing roller 3440 and the second injection nozzle 3470 are positioned to face the front face A1 of the separator 32, and the second pressurizing roller 3460 and the first injection nozzle 3450 are positioned to face the back face B1 of the separator 32.

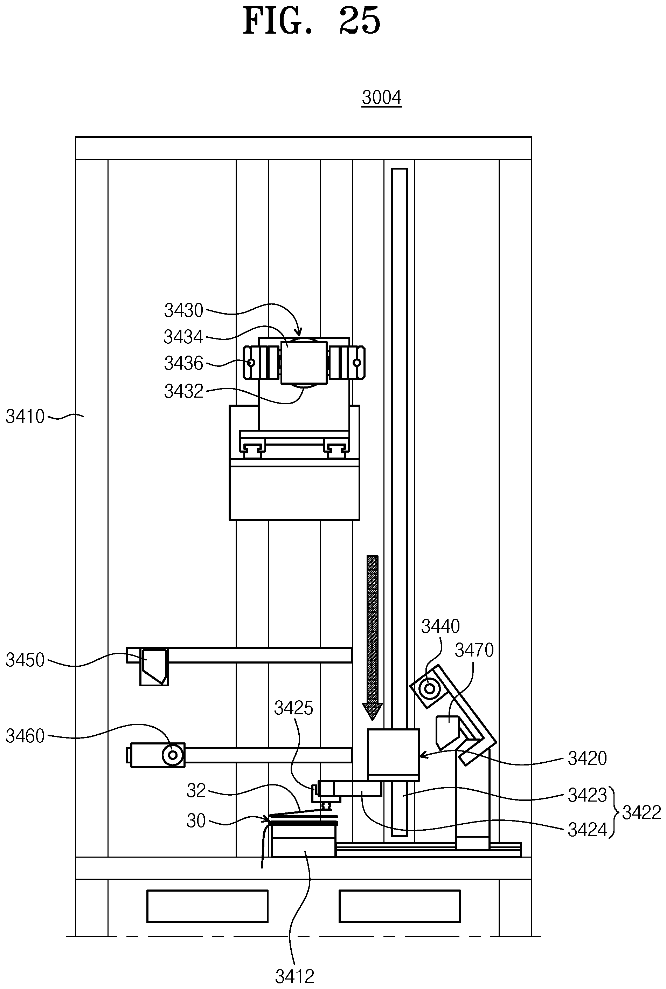

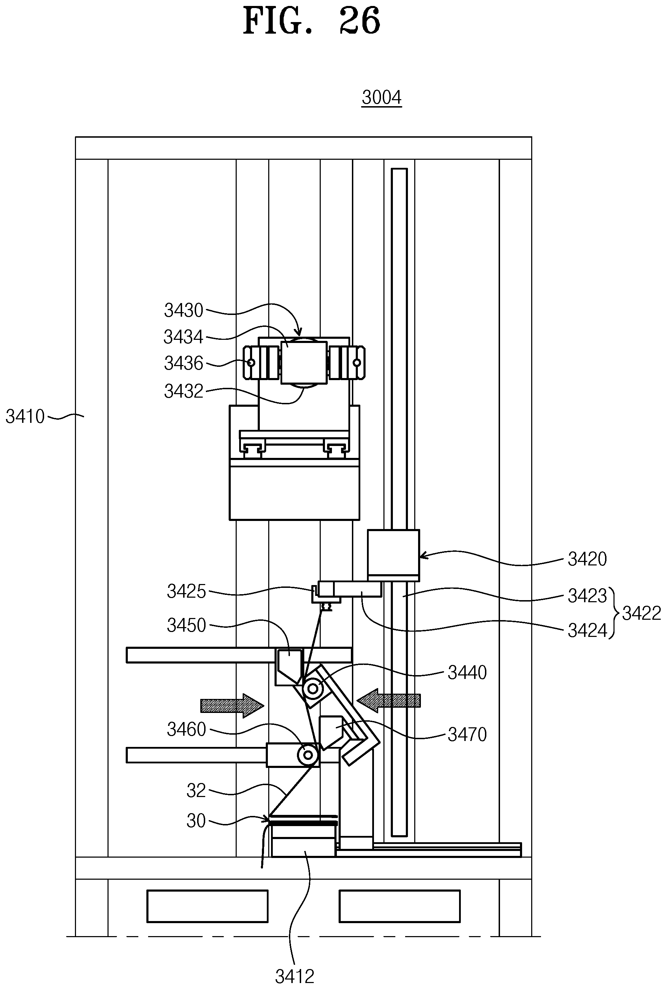

For example, while the grip part 3425 holds and pulls up the separator 32, the first pressurizing roller 3440, the second injection nozzle 3470, the second pressurizing roller 3460, and the first injection nozzle 3450 wait in the first position to avoid interference with the grip part 3425 (see FIG. 25). Then, after the grip part 3425 is moved to a position higher than the separation collection part 3430, the first pressurizing roller 3440, the second injection nozzle 3470, the second pressurizing roller 3460, and the first injection nozzle 3450 are moved from the first position to the second position (see FIG. 26). For example, in FIG. 22, the first position may be the position indicated by the dashed line in Figure 22, and the second position may be the position indicated by the solid line. When the separation collection part 3430 is moved to the second position, the separator 32 passes between the pair of reel rods 3436.

FIGS. 25 to 29 are diagrams illustrating a main disassembly process in which negative electrode plates and positive electrode plates are separated from the separator in the main disassembly unit operation by operation.

The main disassembly process involves separating the separator 32, the negative electrode plate 34, and the positive electrode plates 36 from the electrode assembly 30.

The electrode assembly 30 with the separator open at the separator opening part 3002 is seated on the stage 3412 of the main disassembly unit 3004. The grip part 3425 of the crane part 3420 descends to fix the separator 32 exposed to the upper surface of the electrode assembly 30 (see FIG. 25). With the separator fixed in the grip part 3425, the gripping part 3425 moves upwardly to pull up the separator 32. In this case, the first pressurizing roller 3440, the second injection nozzle 3470, the second pressurizing roller 3460, and the first injection nozzle 3450 wait in the first position to prevent interference with the gripping part 3425. When the gripping part 3425 is moved beyond a certain height, the first pressurizing roller 3440, the second injection nozzle 3470, the second pressurizing roller 3460, and the first injection nozzle 3450 are moved to the second position (see FIG. 26). In this case, the separator 32 is moved by the first pressurizing roller 3440 and the second pressurizing roller 3460 in a zig-zag manner.

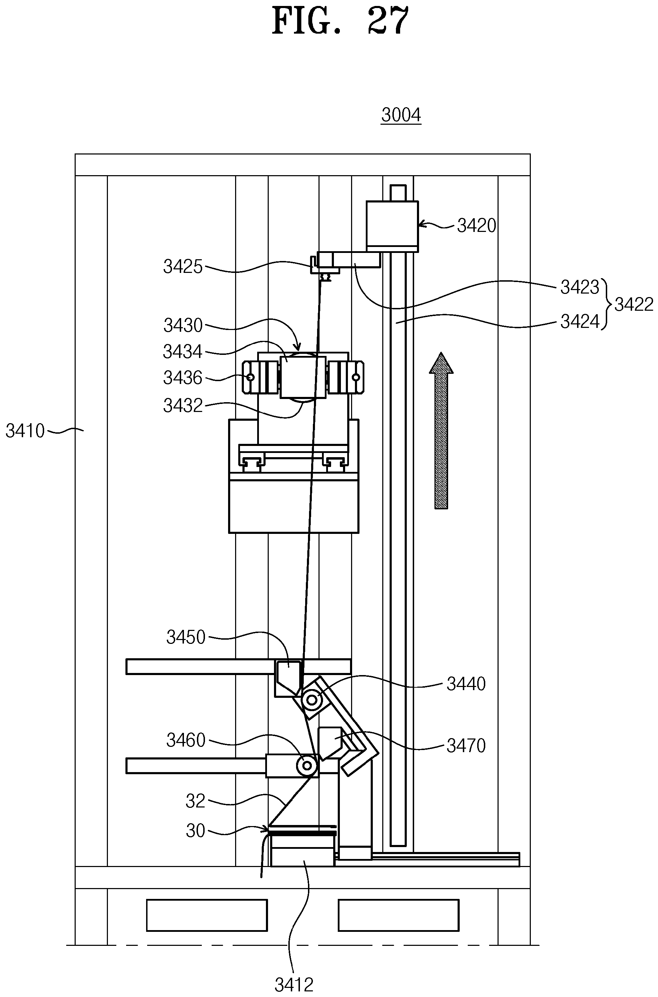

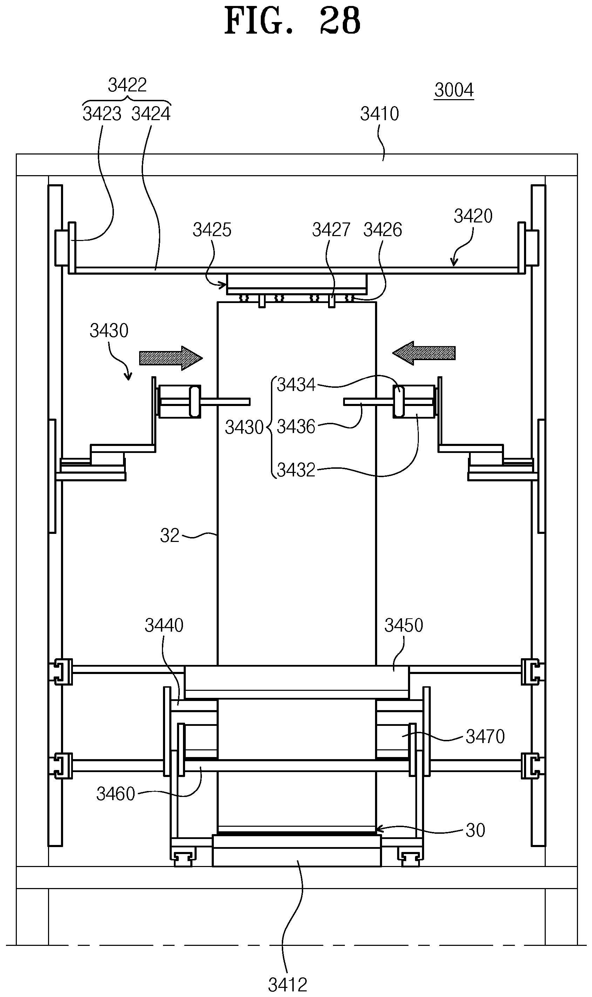

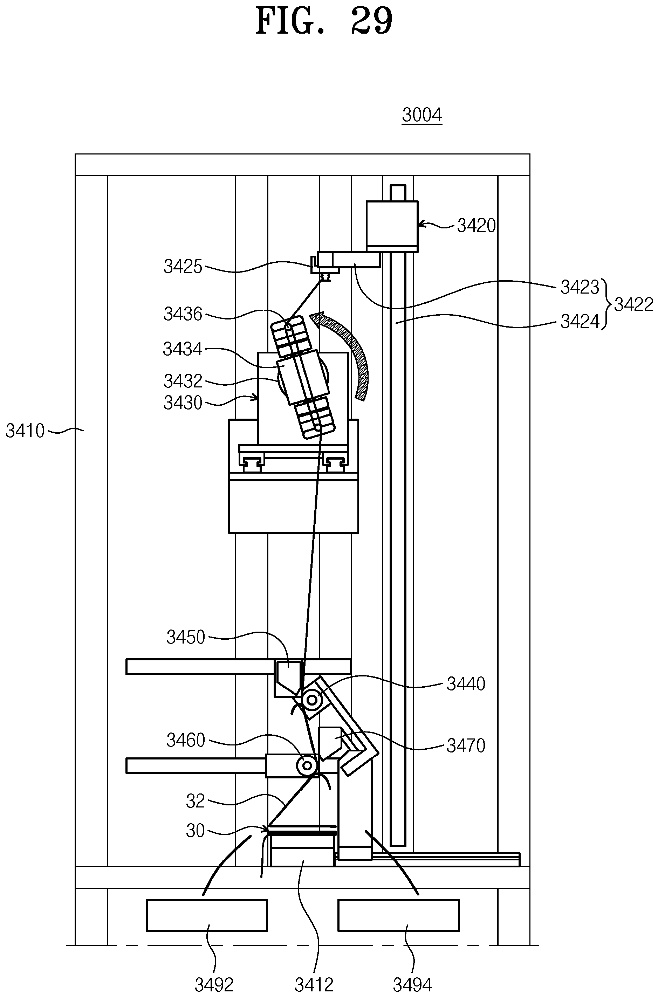

When the gripping part 3425 is moved to a position higher than the separation collection part 3430, the separation collection part 3430 is moved from the first position to the second position (see FIGS. 27 and 28). When the separation collection part 3430 is moved to the second position, the separator 32 passes between the pair of reel rods 3436. The separation collection part 3430 then winds the separator 32 onto the reel rod 3436 in at least one to two rotational motions (see FIG. 29). During this process, the negative electrode plate 34 and the positive electrode plate 36 attached to the separator 32 are separated as they pass through the first pressurizing roller 3440 and the second pressurizing roller 3460. The winding motion of the separation collection part 3425 may include a low-speed rotation motion and a high-speed rotation motion. The low-speed rotation motion occurs until the separator 32 is first wound once or twice around the reel rod 3436, and the high-speed rotation motion occurs after the separator 32 is wound once or twice around the reel rod 3436. The negative electrode plate 34 and the positive electrode plate 36 separated from the separator 32 may be separated and collected in the first collection part 3493 and the second collection part 3494, respectively, located at the bottom of the frame 3410.

FIG. 30 is an enlarged view of a main part for describing a process of separating a negative electrode plate and a positive electrode plate.

As illustrated in FIG. 30, the separator 32 is moved while being bent at a predetermined angle by the second pressurizing roller 3460, and in this case, air injected from the second injection nozzle 3470 is provided to the point at which the front face A1 of the separator 32 is bent, so that the negative electrode plate 34 is easily peeled off from the front face of the separator 32. In the same manner, the separator 32 is moved while being bent at a predetermined angle by the first pressurizing roller 3440, and in this case, the air injected from the first injection nozzle 3450 is provided to the point where the back face B1 of the separator 32 is bent, and the positive electrode plate 36 is easily peeled off from the back face of the separator 32.

In the present embodiment, the negative electrode plate and the positive electrode plate are described as being separated by air, but the present invention is not limited thereto.

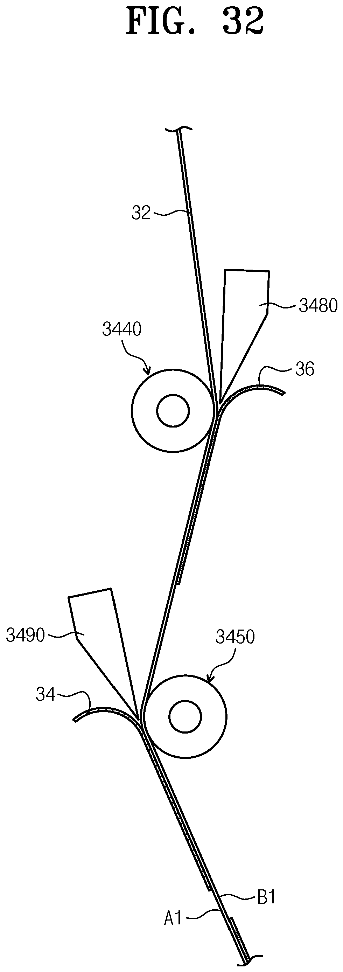

FIG. 32 is a diagram illustrating separation of the negative electrode plate and the positive electrode plate by using a scraper.

Referring to FIG. 32, a first scraper 3490 takes off the negative electrode plate 34 from the front face A1 of the separator 32 while scratching the front face A1 of the separator 32 when the separator 32 is bent by the second pressurizing roller 3450. A second scraper 3480 takes off the positive electrode plate 36 from the rear face B1 of the separator while scratching the rear face B1 of the separator 32 when the separator 32 is bent by the first pressurizing roller 3440.

The foregoing detailed description illustrates the present invention. Further, the above content shows and describes the exemplary embodiment of the present invention, and the present invention may be used in various other combinations, modifications, and environments. That is, the foregoing content may be modified or corrected within the scope of the concept of the invention disclosed in the present specification, the scope equivalent to that of the invention, and/or the scope of the skill or knowledge in the art. The foregoing exemplary embodiment describes the best state for implementing the technical spirit of the present invention, and various changes required in the specific application field and use of the present invention are possible. Accordingly, the detailed description of the invention above is not intended to limit the invention to the disclosed exemplary embodiment. Further, the accompanying claims should be construed to include other exemplary embodiments as well.

## Claims

1. A material separation method for recycling a battery cell, the material separation method comprising:
a disassembling operation of separating an electrode assembly from which a pouch has been removed from a battery cell into first electrode plates, second electrode plates, and a separator,
wherein the disassembling operation includes:
a separator opening operation of opening the separator surrounding the electrode assembly; and
a main disassembling operation of separating the first electrode plates and the second electrode plates from the electrode assembly in which the separator is opened.

2. The material separation method of claim 1, wherein the separator opening operation includes:
a primary unfold operation of holding and unfolding one end of the separator surrounding the electrode assembly; and
a primary removal operation of separating an exposed first first electrode plate from the separator in a state where the separator is unfolded.

3. The material separation method of claim 2, wherein the separator opening operation includes:
an inverting operation of inverting the electrode assembly in a state where the first first electrode plate is removed; and
a secondary unfold operation of holding and unfolding one end of the separator in the inverted electrode assembly.

4. The material separation method of claim 3, wherein the main disassembling operation is performed after the secondary unfold operation.

5. The material separation method of claim 2, further comprising:
a wet treatment operation of providing an electrode plate removal promoting solvent to the electrode assembly so that the first electrode plates and the second electrode plates are easily separated from the separator before the separator opening operation.

6. The material separation method of claim 2, wherein in the main disassembling operation,
the separator exposed on an upper surface of the electrode assembly is held, pulled upwardly, and then wound in a roll form to be collected, and
a first pressurizing roller pressurizes the separator from a front face to a rear face of the separator, and a second pressurizing roller pressurizes the separator from the rear face to the front face of the separator so that the first electrode plate is separated from the rear face of the separator while the separator passes through the first pressurizing roller, and the second electrode plate is separated from the front face of the separator while the separator passes through the second pressurizing roller.

7. The material separation method of claim 6, wherein the disassembling operation includes injecting air to a point where the rear face of the separator is bent by the first pressurizing roller, and injecting air to a point where the front face of the separator is bent by the second pressurizing roller.

8. A material separation device for recycling a battery cell, the material separation device comprising:
a separator opening part for opening a separator surrounding an electrode assembly from which a pouch has been removed from a battery cell; and
a main disassembly unit for separating the first electrode plates and the second electrode plates from the electrode assembly in which the separator is opened,
wherein the separator opening part includes a first unfold part which holds and unfolds one end of the separator surrounding the electrode assembly.

9. The material separation device of claim 8, wherein the separator opening part further includes a primary removal part for separating an exposed first first electrode plate from the separator in a state where the separator is unfolded.

10. The material separation device of claim 9, wherein the separator opening part includes:
an inverting part for inverting the electrode assembly in a state where the first first electrode plate is removed; and
a second unfold part for holding and unfolding one end of the separator surrounding an upper surface of the electrode assembly inverted by the inverting part.

11. The material separation device of claim 10, wherein the first unfold part and the second unfolded part include:
a support stage on which the electrode assembly is placed; and
an unfold module for holding and unfolding the separator of the electrode assembly placed on the support stage.

12. The material separation device of claim 11, wherein the first unfold part and the second unfolded part further include a fixed adsorption part located on one side of the support stage and fixing the separator unfolded by the unfold module.

13. The material separation device of claim 11, wherein the unfold module includes:
a grip part for griping the separator;
a vertical drive part for moving the grip part in a vertical direction; and
a horizontal drive part for moving the vertical drive part in a horizontal direction.

14. The material separation device of claim 13, wherein the grip part includes adsorption pads for vacuum-adsorbing the separator.

15. The material separation device of claim 11, wherein the main disassembly unit includes:
a crane part for pulling upwardly by holding an end of the separator exposed on an upper surface of the electrode assembly;
a separator collection part for winding and collecting the separator lifted upwardly by the crane part in a roll form;
a first pressurizing roller for pressurizing the separator from a front face to a rear face of the separator;
a second pressurizing roller for pressurizing the separator from the rear face to the front face of the separator;
a first injection nozzle for injecting air to a point where the rear face of the separator is bent by the first pressurizing roller; and
a second injection nozzle for injecting air to a point where the front face of the separator is bent by the second pressurizing roller.

16. The material separation device of claim 11, further comprising:
a wet treatment part for providing an electrode plate removal promoting solvent to the electrode assembly so that the first electrode plates and the second electrode plates are easily separated from the separator.

17. A material separation method for recycling a battery cell, the material separation method comprising:
a main disassembling operation of separating an electrode assembly from which a pouch has been removed from a battery cell into first electrode plates, second electrode plates, and a separator,
in the main disassembling operation,
a separator exposed on an upper surface of the electrode assembly is held, pulled upwardly, and then wound in a roll form to be collected,
a first pressurizing roller pressurizes the separator from a front face to a rear face of the separator, and a second pressurizing roller pressurizes the separator from the rear face to the front face of the separator so that the first electrode plate is separated from the rear face of the separator while the separator passes through the first pressurizing roller, and the second electrode plate is separated from the front face of the separator while the separator passes through the second pressurizing roller.

18. The material separation method of claim 17, wherein the main disassembling operation includes injecting air to a point where the rear face of the separator is bent by the first pressurizing roller, and injecting air to a point where the front face of the separator is bent by the second pressurizing roller.

19. The material separation method of claim 17, comprising:
when the separator is wound in the roll form and collected, a low-speed winding operation in which the separator is wound while rotating at a low speed, and a high-speed winding operation in which the separator is wound while rotating at a high speed.

20. The material separation method of claim 19, wherein the high-speed winding operation is performed after the low-speed winding operation.

21. The material separation method of claim 18, further comprising:
a separator opening operation of opening the separator surrounding the electrode assembly before the main disassembling operation.

22. The material separation method of claim 21, wherein the separator opening operation includes:
a primary unfold operation of holding and unfolding one end of the separator surrounding the electrode assembly;
a primary removal operation of separating an exposed first first electrode plate from the separator in a state where the separator is unfolded;
an inverting operation of inverting the electrode assembly in a state where the first first electrode plate is removed; and
a secondary unfold operation of holding and unfolding one end of the separator in the inverted electrode assembly.

23. The material separation method of claim 17, further comprising:
a wet treatment operation of providing an electrode plate removal promoting solvent to the electrode assembly so that the first electrode plates and the second electrode plates are easily separated from the separator before the main disassembling operation.

24. A material separation device for recycling a battery cell, the material separation device comprising:
a main disassembly unit for separating an electrode assembly from which a pouch has been removed from a battery cell into first electrode plates, second electrode plates, and a separator,
wherein the main disassembly unit includes:
a crane part for pulling upwardly by holding an end of the separator exposed on an upper surface of the electrode assembly;
a separator collection part for winding and collecting the separator lifted upwardly by the crane part in a roll form;
a first pressurizing roller for pressurizing the separator from a front face to a rear face of the separator; and
a second pressurizing roller for pressurizing the separator from the rear face to the front face of the separator.

25. The material separation device of claim 24, wherein the main disassembly unit includes:
a first injection nozzle for injecting air to a point where the rear face of the separator is bent by the first pressurizing roller; and
a second injection nozzle for injecting air to a point where the front face of the separator is bent by the second pressurizing roller.

26. The material separation device of claim 24, wherein the main disassembly unit includes:
a first scraper which is installed toward a point where the rear face of the separator is bent by the first pressurizing roller and is in contact with the rear face of the separator; and
a second scraper which is installed toward a point where the front face of the separator is bent by the second pressurizing roller and is in contact with the front face of the separator.

27. The material separation device of claim 24, wherein the crane part includes:
a grip part for gripping the separator; and
a vertical drive part for vertically moving the grip part.

28. The material separation device of claim 27, wherein the grip part includes:
adsorption pads for vacuum-adsorbing the separator; and
pincers for fixing the separator.

29. The material separation device of claim 24, wherein the separator collection part includes:
a rotary motor;
a rotating plate rotated by the rotary motor; and
a pair of reel rods disposed to be spaced apart from each other on the rotary plate and wound with the separator.

30. The material separation device of claim 29, wherein when the separator is wound on the pair of reel rods, the separator collection part rotates at a low speed, and then rotates at a high speed after the separator is wound on the pair of reel rods a predetermined number of times.

31. The material separation device of claim 24, further comprising:
a separator opening part for opening the separator surrounding the electrode assembly from which the pouch has been removed from the battery cell,
wherein the separator opening part includes a first unfold part which holds and unfolds one end of the separator surrounding the electrode assembly.

32. The material separation device of claim 24, further comprising:
a wet treatment part for providing an electrode plate removal promoting solvent to the electrode assembly so that the first electrode plates and the second electrode plates are easily separated from the separator.

33. A material separation method for recycling a battery cell, the material separation method comprising:
a prior preparation operation of removing a pouch surrounding an electrode assembly of the battery cell; and
a disassembling operation of separating the electrode assembly from which the pouch has been removed into first electrode plates, second electrode plates, and a separator,
the material separation method further comprises
a wet treatment operation of providing an electrode plate removal promoting solvent to the electrode assembly so that the first electrode plates and the second electrode plates are easily separated from the separator before the disassembling operation.

34. The material separation method of claim 33, wherein the prior preparation operation includes:
a cutting operation of cutting an edge of the pouch surrounding the electrode assembly;
a separating operation of separating an upper cover and a lower cover of the pouch in a state where the edge of the pouch is cut, and
in the wet treatment operation, the electrode assembly from which the pouch has been removed is treated.

35. The material separation method of claim 33, wherein in the wet treatment operation, the electrode plate removal promoting solvent is supplied to the electrode assembly from which the pouch has been removed, and
the electrode plate removal promoting solvent includes water.

36. The material separation method of claim 33, wherein in the wet treatment operation, the electrode plate removal promoting solvent is provided through a nozzle or through a sponge soaked in the electrode plate removal promoting solvent, or the electrode assembly is immersed in a water tank containing the electrode plate removal promoting solvent.

37. The material separation method of claim 33, wherein the prior preparation operation includes:
a discharge check operation of checking a discharge state of the battery cell before removing the pouch;
an alignment operation of aligning the battery cell while performing the discharge check operation; and
a flame detection operation of checking whether the battery cell has a flame.

38. The material separation method of claim 34, wherein the prior preparation operation further includes a flame detection operation of checking whether the battery cell has a flame, and
the cutting operation includes the flame detection operation, and the battery cell in which the flame is detected is immersed in a water tank and is treated.

39. The material separation method of claim 34, wherein the disassembling operation includes:
a separator opening operation of opening the separator surrounding the electrode assembly; and
a main disassembling operation of separating the first electrode plates and the second electrode plates from the electrode assembly in which the separator is opened, and
the separator opening operation includes:
a primary unfold operation of holding and unfolding one end of the separator surrounding the electrode assembly; and
a primary removal operation of separating an exposed first first electrode plate from the separator in a state where the separator is unfolded.

40. The material separation method of claim 39, wherein the separator opening operation includes:
an inverting operation of inverting the electrode assembly in a state where the first first electrode plate is removed; and
a secondary unfold operation of holding and unfolding one end of the separator in the inverted electrode assembly, and
the main disassembling operation is performed after the secondary unfold operation.

41. The material separation method of claim 39, wherein in the main disassembling operation, an end of the separator exposed on an upper surface of the electrode assembly is held, pulled upwardly, and then wound in a roll form to be collected, and
a first pressurizing roller pressurizes the separator from a front face to a rear face of the separator, and a second pressurizing roller pressurizes the separator from the rear face to the front face of the separator so that the first electrode plate is separated from the rear face of the separator while the separator passes through the first pressurizing roller, and the second electrode plate is separated from the front face of the separator while the separator passes through the second pressurizing roller.

42. The material separation method of claim 41, wherein the disassembling operation includes injecting air to a point where the rear face of the separator is bent by the first pressurizing roller, and injecting air to a point where the front face of the separator is bent by the second pressurizing roller.

43. A material separation device for recycling a battery cell, the material separation device comprising:
a prior preparation part for removing a pouch surrounding an electrode assembly of the battery cell;
a disassembly part for separating the electrode assembly from which the pouch has been removed into first electrode plates, second electrode plates, and a separator; and
a wet treatment part for providing an electrode plate removal promoting solvent to the electrode assembly so that the first electrode plates and the second electrode plates are easily separated from the separator in the disassembly part.

44. The material separation device of claim 43, wherein the prior preparation part includes:
a cutting part for cutting an edge of the pouch surrounding the electrode assembly; and
a cover separation part for separating an upper cover and a lower cover of the pouch in a state where the edge is cut.

45. The material separation device of claim 43, wherein the wet treatment part supplies the electrode plate removal promoting solvent to the electrode assembly from which the pouch has been removed, and
the electrode plate removal promoting solvent includes water.

46. The material separation device of claim 45, wherein the wet treatment part employs any one of a method of injecting the electrode plate removal promoting solvent toward the electrode assembly by using a nozzle, a method of contacting the electrode assembly with a sponge soaked in the electrode plate removal promoting solvent, and a method of immersing the electrode assembly in a water tank filled with the electrode plate removal promoting solvent.

47. The material separation device of claim 43, wherein the prior preparation part includes:
a discharge check part for checking whether the battery cell is discharged;
an aligning part for aligning the battery cells before cutting the battery cells; and
a flame detection means for detecting whether the battery cell has a flame.

48. The material separation device of claim 44, wherein the cutting part cuts the edge of the pouch by using a circular rotary cutter blade, and
the material separation device further includes a flame detection means to check whether the battery cell has a flame, and the battery cell where the flame is detected is pushed into a water tank containing water to prevent fire.

49. The material separation device of claim 43, wherein the disassembly part includes:
a separator opening part for opening the separator surrounding the electrode assembly; and
a main disassembly unit for separating the first electrode plates and the second electrode plates from the electrode assembly in which the separator is opened, and
the separator opening part includes:
a first unfold part for holding and unfolding one end of the separator surrounding the electrode assembly; and
a primary removal part for separating an exposed first first electrode plate from the separator in a state where the separator is unfolded.

50. The material separation device of claim 49, wherein the separator opening part includes:
an inverting part for inverting the electrode assembly in a state where the first first electrode plate is removed; and
a secondary unfold part for holding and unfolding one end of the separator surrounding the upper surface of the electrode assembly, which has been inverted by the inverting part.

51. The material separation device of claim 49, wherein the main disassembly unit includes:
a crane part for pulling upwardly by holding an end of the separator exposed on an upper surface of the electrode assembly;
a separator collection part for winding and collecting the separator lifted upwardly by the crane part in a roll form;
a first pressurizing roller for pressurizing the separator from a front face to a rear face of the separator;
a second pressurizing roller for pressurizing the separator from the rear face to the front face of the separator;
a first injection nozzle for injecting air to a point where the rear face of the separator is bent by the first pressurizing roller; and
a second injection nozzle for injecting air to a point where the front face of the separator is bent by the second pressurizing roller.
